Europäisches Patentamt

European Patent Office

Office européen des brevets

(11) Publication number: **0 385 353**
**A2**

## EUROPEAN PATENT APPLICATION

(21) Application number: 90103706.9

(22) Date of filing: 26.02.90

(51) Int. Cl.5- **A01F 29/06, A01F 29/00**

(30) Priority: 03.03.89 IT 3062389 U

(43) Date of publication of application:
**05.09.90 Bulletin 90/36**

(84) Designated Contracting States:
**AT BE CH DE ES FR GB LI NL**

(71) Applicant: **SEKO S.p.A.**
**Via Gorizia 90**
**I-35010 Curtarolo (Padova)(IT)**

(72) Inventor: **Loppoli, Giuseppe**
**Via Regina Margherita 30/A**
**I-35010 Grantorto (Padova)(IT)**
Inventor: **Zago, Lino**
**Via Brenta**
**I-35010 Campo S. Martino (Padova)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Improved truck for crumbling, shredding, mixing and distributing fodder and straw bales or the like.**

(57) The improved truck includes a substantially hopper-shaped container in which upper and lower longitudinal screw feeders are provided; the truck further includes octagonal knives (9) with corresponding cutting blades; the knives are associated with the respective screw feeder at the perimetric cutting edge (8) and are spaced regularly from one another; longitudinally extending counterblades (11,12) are bolted in the container and are provided with teeth rigidly associated therewith; said teeth skim the profiles of the screw feeders during their rotation and are regularly spaced from one another to be laterally skimmed by the knives.

FIG.3

# IMPROVED TRUCK FOR CRUMBLING, SHREDDING, MIXING AND DISTRIBUTING FODDER AND STRAW BALES OR THE LIKE

The present invention relates to an improved truck for crumbling, shredding, mixing and distributing giant cylindrical and/or prismatic bales of fodder and straw or grass ensilage.

The mixing trucks currently known are substantially constituted by a hopper-shaped box-like body (container) longitudinally provided with closely spaced rotating lower screw feeders conveying material toward the front part of said hopper, and with spaced rotating upper screw feeders which convey material in the opposite direction with respect to the previous ones.

In particular, the lower screw feeders have a constant-profile spiral and quadrangular knives are rigidly associated therewith, proximate to the perimetric cutting edge, by means of bolts.

Toothed-blade elements are welded to the bottom of said container and are adapted to improve shredding and to keep said lower screw feeders clean.

Though it has considerable technical and operational qualities, this known truck is not free from disadvantages, among which the possibility that foreign matter, such as for example wire, pieces of wood or other material, may end up between the lower screw feeders and the bottom of the container, jamming between said container and said knives, causing undesired breakages.

Another disadvantage resides in the fact that said toothed-blade elements fail to effectively clean the screw feeders and the knives rigidly associated therewith.

The aim of the present invention is to improve a truck for crumbling, shredding, mixing and distributing giant cylindrical and/or prismatic bales of fodder and straw or grass ensilage in order to eliminate the disadvantages described above in known types.

A consequent primary object is to improve the shredding of the inserted products.

Another important object is to prevent masses of product from jamming around the shafts which bear the screw feeders and on the knives.

Not least object is to provide an improved mixing truck at low costs and obtainable with conventional production systems.

This aim and other objects which will become apparent hereinafter are achieved by an improved truck for crumbling, shredding, mixing and distributing fodder and straw bales or the like, comprising a substantially hopper-shaped container in which upper and lower longitudinal pairs of screw feeders are provided, characterized in that it comprises octagonal knives with corresponding cutting blades, each knife being associated, by means of a single central bolt, with the respective said screw feeder at the perimetric cutting edge, said knives being spaced from one another by a constant pitch, longitudinally extending counterblades being bolted in the container and being provided with teeth rigidly associated therewith, said teeth skimming, with their vertices, the profile of said screw feeders during their rotation and being spaced from one another by a constant pitch which is such as to be laterally skimmed by said knives.

Further characteristics and advantages will become apparent from the detailed description of an embodiment of the invention, illustrated only by way of non-limitative example in the accompanying drawings, wherein:

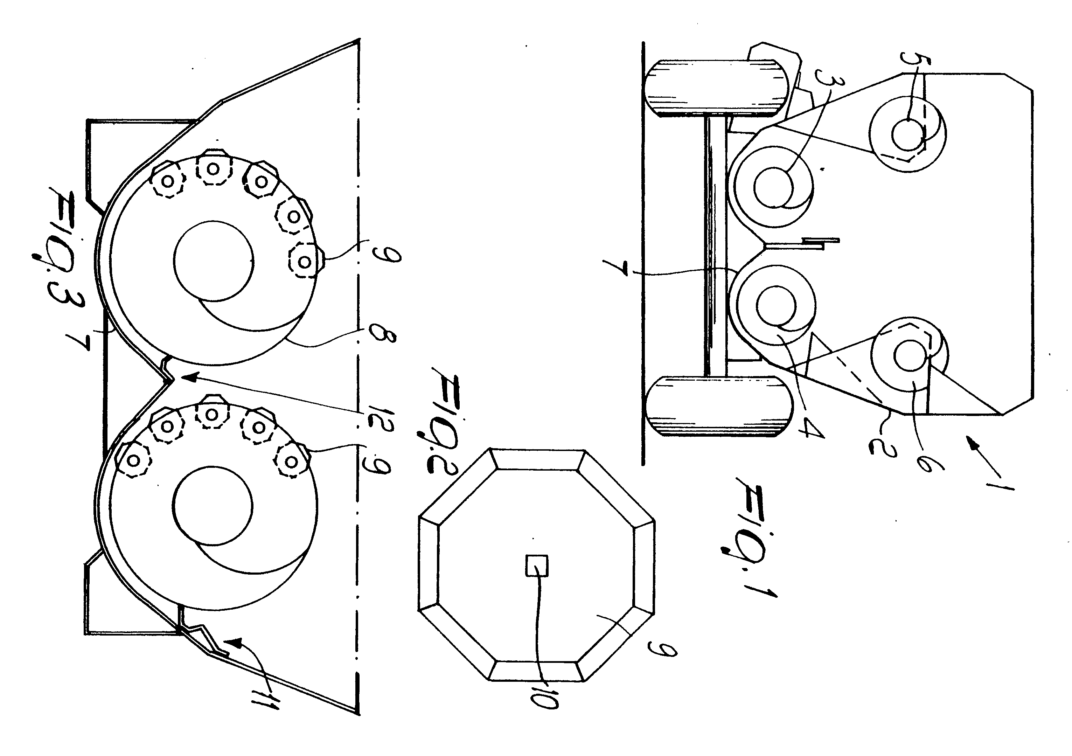

figure 1 is a schematic transverse sectional view of a truck for crumbling, shredding, mixing and distributing giant cylindrical and/or prismatic bales of fodder and straw or grass ensilage;

figure 2 is a front view of one of the knives applied to the screw feeders provided inside the truck of figure 1;

figure 3 is an enlarged transverse sectional view of the lower part of the truck of figure 1;

figure 4 is a front view of a flattened first lateral counterblade which can be bolted inside the truck of figure 1;

figure 5 is a side view of the counterblade of figure 4 after bending;

figure 6 is an enlarged sectional view taken along the plane VI-VI of figure 4;

figure 7 is an enlarged sectional view taken along the plane VII-VII of figure 4;

figure 8 is a front view of a flattened second central counterblade which can be bolted inside the truck of figure 1;

figure 9 is a side view of the counterblade of figure 8 after bending;

figure 10 is an enlarged sectional view taken along the plane X-X of figure 8;

figure 11 is an enlarged sectional view taken along the plane XI-XI of figure 8.

With reference to the above figures, a truck for crumbling, shredding, mixing and distributing giant cylindrical and/or prismatic bales of fodder and straw or grass ensilage is generally indicated by the reference numeral 1 and comprises a substantially hopper-shaped container 2, made of sheet metal, in which two closely spaced lower rotating screw feeders, respectively 3 and 4, and two spaced upper rotating screw feeders, respectively 5 and 6, are provided.

Conveniently, said container 2 has a bottom 7 the surface whereof follows the curve of the lower screw feeders and thus has two longitudinal depressions.

Knives 9 are associated proximate to the perimetric cutting edge 8 of each screw feeder, and each knife has an octagonal shape; each side constitutes a cutting blade.

Conveniently, each knife 9 has a central quadrangular hole 10 in which a complementari ly shaped square head portion of a bolt (not illustrated) for fixing to the screw feeder is accommodated.

At this point it should be stressed that the knives are arranged regularly spaced from one another on the respective screw feeders by a constant pitch.

A first and a second counterblade 11 and 12 are bolted, respectively laterally and to the center, on the upper regions of the bottom 7, on the side thereof which is first encountered by the blades 9 during the rotation of the lower screw feeders 3 and 4.

According to the invention, said first counterblade 11, conveniently constituted by a rectangular sheet metal element, has holes 13 for bolting to said bottom 7, and a series of teeth 15, which have a substantially triangular shape·and are mutually spaced by a same pitch, extends on the longitudinal side 14 which is positioned below.

According to the invention, the vertices of said teeth skim the profile of the screw feeder 4, whereas the pitch which spaces said teeth 15 is correlated to that which spaces said knives 9 which protrude from the screw feeder so that they pass very close to the sides of the teeth 15.

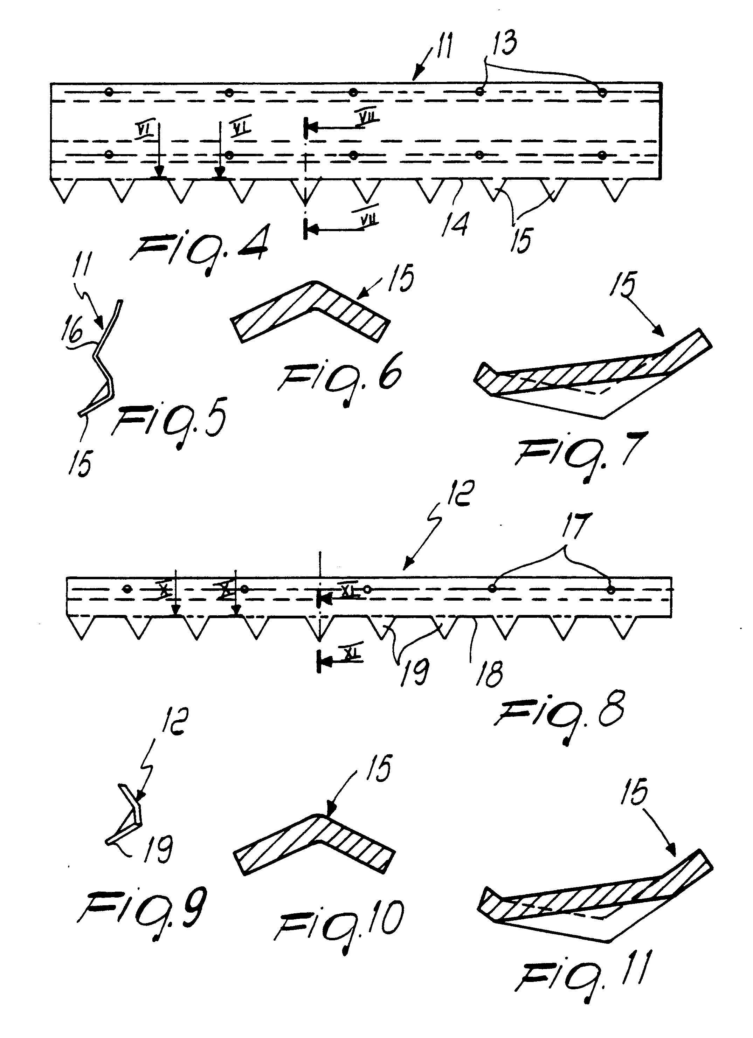

Said first counterblade 11 is conveniently bent, as shown in figures 5 to 7, so that the side 14 and the teeth protrude from the bottom of the container and so as to have, in the median region, a longitudinal profile 16 with triangular cross section so as to retain the material being processed, preventing it from accumulating against the screw feeder.

Said second counterblade 12, illustrated in figures 8 to 11, essentially has the same technical characteristics as said first counterblade 11, and therefore has bolting holes 17, a longitudinal side 18 which skims the profile of said lower screw feeder 3 and a series of teeth 19 having such a pitch as to be laterally skimmed by the knives 9 of said screw feeder 3.

Said second counterblade 12 has a smaller transverse size than said first one 11, since it does not have the longitudinal portion bent in the shape of a triangular profile.

The described improvements allow a better operation of the truck for crumbling, shredding, mixing and distributing giant cylindrical and/or prismatic bales of fodder and straw or grass ensilage in which they are applied.

In particular, when foreign matter inserts itself between the knives and the bottom 7 of the container, the shape of said knives 9 allows said foreign matter to force said blades to rotate rigidly with the bolts, overcoming the locking friction.

Foreign matter is thus allowed to pass and the rotation of the knives is such that a new cutting blade arranges itself in the place of the preceding one without any breakage occurring.

The particular arrangement of the counterblades 11 and 12 and of the series of teeth 15 and 19 with respect to the profile of the screw feeders 3 and 4, as well as of the knives 9 rigidly associated therewith, allows a better shredding of the material being processed and a better cleaning of the screw feeders and of the knives, preventing the tangling, around said screw feeders and knives, of undesirable amounts of material which limit the cutting action and cause the machine to absorb a considerable amount of available power.

Another advantage resides in the fact that the counterblades can be changed in case of wear or breakage, since they are fixed to the container simply by bolting.

In practice it has thus been observed that the invention has brilliantly achieved the intended aim and objects.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Improved truck for crumbling, shredding, mixing and distributing fodder and straw bales or the like, comprising a substantially hopper-shaped container (2) in which upper and lower longitudinal pairs of screw feeders (3,4,5,6) are provided, characterized in that it comprises octagonal knives (9) with corresponding cutting blades, each knife being associated, by means of a single central bolt, with the respective said screw feeder at the perimetric cutting edge (8), said knives being spaced from one another by a constant pitch, longitudinally extending counterblades (11,12) being bolted in the container and being provided with teeth (15,19) rigidly associated therewith, said teeth skimming, with their vertices, the profile of said screw feeders during their rotation and being spaced from one another by a constant pitch which is such as to be laterally skimmed by said knives.

2. Improved truck according to claim 1, characterized in that each of said octagonal knives (9) has a central polygonal hole (10) in which it is possible to insert a complementarily shaped polygonal under-head portion provided on said locking bolt, which is thus rigidly associated with said knife.

3. Improved truck according to claim 1, characterized in that said counterblades (11,12) are constituted by elements made of substantially rectangular sheet metal which have, at their lower side, said series of teeth (15,19), each of said teeth having a triangular shape.

4. Improved truck according to claim 1, characterized in that said counterblades (11,12) are bent longitudinally so that said teeth (15,19) protrude from the walls of said container.

5. Improved truck according to one or more of the preceding claims, characterized in that said counterblades (11,12) are bolted to the parts of said container which are first encountered by each of said octagonal knives during the rotation of said screw feeders (3,4,5,6).

Fig. 1

Fig. 2

Fig. 3

*Fig.4*

*Fig.5*

*Fig.6*

*Fig.7*

*Fig.8*

*Fig.9*

*Fig.10*

*Fig.11*